**Europäisches Patentamt**

**European Patent Office**

**Office européen des brevets**

(19)

(11) Veröffentlichungsnummer : **0 190 379 B1**

(12)

# EUROPÄISCHE PATENTSCHRIFT

(45) Veröffentlichungstag der Patentschrift :
26.04.89

(51) Int. Cl.⁴ : **A 46 B 13/02**, H 01 H 21/10

(21) Anmeldenummer : **85101193.2**

(22) Anmeldetag : **05.02.85**

(54) **Zahnbürste mit einem bewegbaren Bürstenkörper.**

(43) Veröffentlichungstag der Anmeldung :
**13.08.86 Patentblatt 86/33**

(45) Bekanntmachung des Hinweises auf die Patenterteilung : **26.04.89 Patentblatt 89/17**

(84) Benannte Vertragsstaaten :
**AT CH DE FR GB LI**

(56) Entgegenhaltungen :
CH–A– 395 019
CH–A– 434 189
DE–U– 7 442 492
FR–A– 1 133 470
US–A– 3 033 197
US–A– 3 240 077
US–A– 3 588 936

(73) Patentinhaber : **Elektro-Wärme-Technik Siegfried
Petz
Flachslander Strasse 8
D-8500 Nürnberg (DE)**

(72) Erfinder : **Petz, Günter
Flachslander Strasse 8
D-8500 Nürnberg (DE)**

(74) Vertreter : **Göbel, Matthias, Dipl.-Ing.
Pruppacher Hauptstrasse 5-7
D-8501 Pyrbaum-Pruppach (DE)**

**Beschreibung**

Die Erfindung betrifft eine elektrische Zahnbürste mit einem bewegbaren Bürstenkörper, der zu Putzbewegungen durch einen im Handgriff untergebrachten Elektromotor antreibbar ist, dessen Anschlußglieder über einen Ein-Ausschalter mit einer im Handgriff angeordneten Stromquelle verbindbar sind, wobei der Elektromotor mit seinem einen Anschlußglied an einem Pol der Stromquelle und mit seinem anderen Anschlußglied am Gehäuse des Elektromotors anliegt und bei der der andere Pol der Stromquelle mit einer durch eine Schaltwippe abbiegbaren Schaltfeder verbunden ist, die entgegen einer Rückstellkraft mit dem Gehäuse kontaktierbar ist.

Bei einer elektrischen Zahnbürste (US-A-3 033 197) ist es bereits bekannt, eine im Stromkreis eines Elektromotors liegende Schaltfeder mittels eines im Zahnbürstengehäuse gelagerten Druckknopfes an einem mit dem Gehäuse des Elektromotors verbundenen Kontaktstück anzulegen. Der Druckknopf ist jedoch als Nachteil nicht gegen unbeabsichtigte Betätigungen gesichert. Bei einer anderen elektrischen Zahnbürste (CH-A-395 019) findet eine an das Gehäuse des Elektromotors anlegbare Schaltfeder Verwendung, die durch einen Betätigungsschieber zu Kontaktierungen abbiegbar ist. Der Betätigungsschieber ermöglicht zwar eine Verrastung der Schaltfeder in Schaltstellungen, erfordert andererseits aber einen großen und komplizierten Bauaufwand.

Es ist Aufgabe der Erfindung, einfache Maßnahmen zur sicheren und störungsfreien Handhabung von elektrischen Zahnbürsten der eingangs genannten Art zu schaffen.

Nach der Erfindung ist diese Aufgabe dadurch gelöst, daß die Schaltwippe durch an federnd elastisch ausgebildeten Streifenteilen angeordneten kugelabschnittsförmigen Anformungen und im Handgriff ausgebildeten Ausnehmungen in den Schaltstellungen fixierbar ist. Abgesehen davon, daß bei dieser Zahnbürste vorteilhaft der Elektromotor selbst ein Teil des Ein- Ausschalters bildet, ist die Schalteinrichtung im Aufbau einfach und an unbeabsichtigten Betätigungen gehindert, was sich günstig auf die Betriebsbereitschaft der Stromquelle auswirkt.

In Ausgestaltung der Zahnbürste ist vorgesehen, daß die Schaltwippe an einer den Elektromotor tragenden und im Handgriff abgestützten Konsole lagert, die in Stegen die Ausnehmungen für die Rastenkörper und die Lagerzapfen der Schaltwippe aufweist. Die Konsole erlaubt eine Vormontage von Elektromotor und Schalteinrichtung.

Die Erfindung ist anhand eines Ausführungsbeispiels in der Zeichnung verdeutlicht. Hierin bedeuten :

Fig. 1 ein Teilstück eines Handgriffs, teilweise im Schnitt,

Fig. 2 einen Teilschnitt einer Konsole vergrößert,

Fig. 3 eine Schaltwippe in Unteransicht vergrößert,

Fig. 4 eine Schaltwippe im Schnitt

Fig. 5 einen Teilschnitt einer Dichtkappe, vergrößert und

Fig. 6 ein Schaltbild einer Zahnbürste.

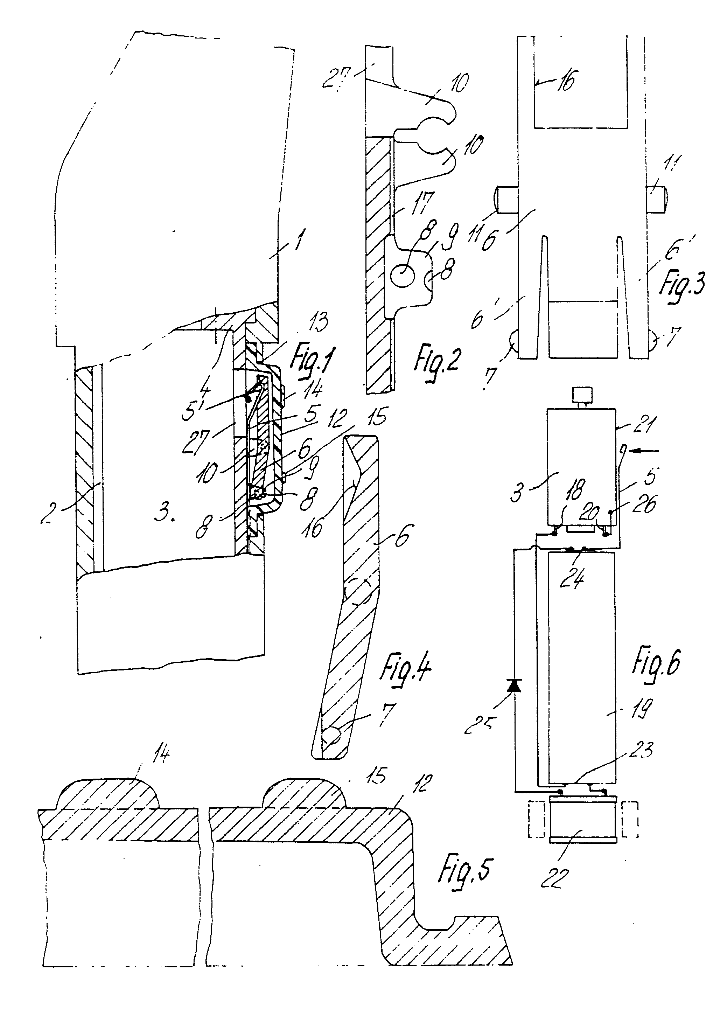

In den Figuren ist mit 1 ein Handgriff der Zahnbürste bezeichnet, der in seinem Innenraum 2 einen Elektromotor 3 als Antriebsorgan für einen nicht näher dargestellten Bürstenkörper aufnimmt. Der Elektromotor 3 ist in einer im Handgriff 1 gestützten Konsole 4 (Fig. 2) festgelegt. Die Konsole 4 trägt einen als Schaltfeder 5 dienenden Blattfederformteil, der vermittels einer an der Konsole 4 gelagerten Schaltwippe 6 (Fig. 3, 4) zu Kontaktierungen mit dem Gehäuse des Elektromotors 3 durch eine Ausnehmung 27 hindurch abbiegbar ist. Die Schaltwippe 6 ist mit Streifenteilen 6' versehen, die außen als Rastenkörper dienende Kugelabschnitte 7 tragen. Die Kugelabschnitte 7 kommen mit Ausnehmungen 8 an den Stegen 9 der Konsole 4 zur Wirkung. Weitere Stege 10 dienen der Aufnahme der Lagerzapfen 11 der fchaltwippe 6. Die Schaltwippe 6 ist durch eine Abdeckkappe 12 (Fig. 5) aus federnd elastischem Werkstoff übergriffen, die einen Durchbruch 13 im Handgriff 1 dicht verschließt. Die Abdeckkappe 13 kann Griffleisten 14, 15 aufweisen, die die Handhabung der Schaltwippe 6 verbessern helfen. Durch eine unterschiedliche Breite der Griffleisten 14 und 15 sind die Schaltstellungen der Schaltwippe 6 für den Benutzer erspürbar.

Die Schaltfeder 5 taucht mit einem zurückgebogenen Kontaktende 5' in eine Ausnehmung 16 der Schaltwippe 6 zur axialen Fixierung ein, während der übrige Teil der Schaltfeder 5 in eine Nut 17 der Konsole 4 (Fig. 2) geführt ist.

In Fig. 6 ist erkennbar, daß das eine Anschlußglied 18 des Elektromotors 3 permanent mit dem Minuspol 23 der Stromquelle 19, z. B. einem Akkumulator verbunden ist, während das andere Anschlußglied 20 bei 26 am Gehäuse 21 des Elektromotors 3 anliegt. Außerdem ist der Pluspol 24 der Stromquelle 19 mit der Schaltfeder 5 verbunden, so daß bei Abbiegungen der Schaltfeder 5 aus der gezeigten Trennstellung Kontaktierungen derselben mit dem Gehäuse 21 des Elektromotors zum Zwecke einer elektrischen Verbindung von Elektromotor 3 und Stromquelle 19 erfolgen. Durch Zurückkippen der Schaltwippe 6 in die Stellung der Fig. 1 bzw. 6 hebt die Schaltfeder 5 vom Gehäuse 21 ab und die elektrische Verbindung zwischen Elektromotor 3 und Stromquelle 19 ist unterbrochen. Beim Ausführungsbeispiel liegt die Sekundärwicklung 22 einer Ladeeinrichtung über eine Gleichrichterdiode 25 an der Stromquelle 19 permanent an.

**Patentansprüche**

1. Elektrische Zahnbürste mit einem bewegba-

2

ren Bürstenkörper, der zu Putzbewegungen durch einen im Handgriff untergebrachten Elektromotor antreibbar ist, dessen Anschlußglieder über einen Ein- Ausschalter mit einer im Handgriff angeordneten Stromquelle verbindbar sind, wobei der Elektromotor (3) mit seinem einen Anschlußglied (18) an einem Pol (23) der Stromquelle (19) und mit seinem anderen Anschlußglied (20) am Gehäuse (21) des Elektromotors (3) anliegt und bei der der andere Pol (24) der Stromquelle (19) mit einer durch eine Schaltwippe (6) abbiegbaren Schaltfeder (5) verbunden ist, die entgegen einer Rückstellkraft mit dem Gehäuse (21) kontaktierbar ist, dadurch gekennzeichnet, daß die Schaltwippe (6) durch an federnd elastisch ausgebildeten Streifenteilen (6') angeordneten kugelabschnittsförmigen Anformungen (7) und im Handgriff (1) ausgebildeten Ausnehmungen (8) in den Schaltstellungen fixierbar ist.

2. Zahnbürste nach Anspruch 1, dadurch gekennzeichnet, daß die Schaltwippe (6) an einer den Elektromotor (3) tragenden und im Handgriff (1) abgestützten Konsole (4) lagert, die in Stegen (9) die Ausnehmungen (8) aufweist.

### Claims

1. Electric tooth brush with a movable brush body which is driven by an electric motor allocated in the handle for the purpose of brushing movements. The contact pins of the electric motor can be connected with a current source allocated in the handle via a circuit closer/circuit breaker. The electric motor (3) is connected with one pole (23) of the current source (19) via one of its contact pins (18) and with the case (21) of the electric motor (3) via its other contact pin (20). The other pole (24) of the current source (19) is connected with a switch spring (5), which can be bent off by means of a rocker switch (6) and bonded with the case (21) in opposite direction to a restoring force. The electric tooth brush is characterized in the way that the rocker switch (6) is fixable in the operating positions by means of spherical segments (7) allocated at resilient strips (6') and by means of recesses (8) located in the handle (1).

2. Tooth brush according to claim 1, characterized in the way that the rocker switch (6) is installed at a console (4) which carries the electric motor (3) and which is supported in the handle (1). This console (4) shows the recesses (8) located in fixed links (9).

### Revendications

1. Brosse à dents électrique, comportant un corps de brosse mobile, qui peut être actionné, pour les mouvements de nettoyage, par un moteur électrique disposé dans la poignée, dont les organes de branchement peuvent être reliés à une source de courant se trouvant dans la poignée par l'intermédiaire d'un commutateur, le moteur électrique (3) étant relié, par un de ses organes de branchement (18), à un pôle (23) de la source de courant (19) et, par son autre organe de branchement (20), au boîtier (27) du moteur électrique (3), et l'autre pôle (24) de la source de courant (19) étant relié à un ressort de commutation (5) qui peut être plié par une bascule de commutation (6), ressort qui peut entrer en contact avec le boîtier (21) à l'encontre d'une force de rappel, caractérisée en ce que la bascule (6) peut être fixée dans les positions de commutation par des saillies (7), en forme de calotte sphérique, disposées sur des parties de bande élastiques (6') et des évidements (8) réalisés dans la poignée (1).

2. Brosse à dents électrique selon la revendication 1, caractérisée en ce que la bascule (6) est montée sur une console (4) portant le moteur électrique (3) et supportée dans la poignée (1), console qui comporte les évidements (8) dans des traverses (9).

Fig.1

Fig.2

Fig.3

Fig.4

Fig.5

Fig.6